(19) **Europäisches Patentamt**

**European Patent Office**

**Office européen des brevets**

(11) Veröffentlichungsnummer: **0 245 197 B1**

(12) # EUROPÄISCHE PATENTSCHRIFT

(45) Veröffentlichungstag der Patentschrift: **29.07.92**

(21) Anmeldenummer: **87810091.6**

(22) Anmeldetag: **16.02.87**

(51) Int. Cl.⁵: **A47J 31/40**, A47J 31/00, A47J 31/42

(54) **Verfahren zur Zubereitung von Kaffee.**

(30) Priorität: **05.05.86 DE 3615158**

(43) Veröffentlichungstag der Anmeldung:
**11.11.87 Patentblatt 87/46**

(45) Bekanntmachung des Hinweises auf die
Patenterteilung:
**29.07.92 Patentblatt 92/31**

(84) Benannte Vertragsstaaten:
**AT BE CH DE ES FR GB GR IT LI LU NL SE**

(56) Entgegenhaltungen:
**EP-A- 0 100 030        WO-A-82/01120**
**DE-A- 2 053 466        DE-A- 3 316 157**
**FR-A- 2 226 137        FR-A- 2 477 001**

(73) Patentinhaber: **Cafina AG**
**Römerstrasse 2**
**CH-5502 Hunzenschwil(CH)**

(72) Erfinder: **Meier, Hermann**
**Meisenweg 5**
**CH-5312 Döttingen(CH)**

(74) Vertreter: **Rottmann, Maximilian R.**
**c/o Rottmann, Ouehl & Zimmermann AG**
**Glattalstrasse 37**
**CH-8052 Zürich(CH)**

**Beschreibung**

Die vorliegende Erfindung bezieht sich auf ein Verfahren zur Zubereitung von Kaffee mittels einer, insbesondere programmgesteuerten, Kaffeemaschine, die ein Kaffeebohnen-Mahlwerk, eine durch einen verschiebbaren Kolben verschliessbare, im Volumen veränderliche Brühkammer zur Aufnahme eines aufzubrühenden Kaffeepulverkuchens und eine Brühwasserquelle aufweist. Bei diesem Verfahren werden Kaffeebohnen mit einem einstellbaren Feinheitsgrad zu Kaffeepulver gemahlen, dann wird das Kaffeepulver in einstellbarer Menge in die Brühkammer eingefüllt, die Brühkammer wird verschlossen und deren Volumen wird durch Verschiebung des Kolbens derart verkleinert, dass ein einstellbarer Druck auf den eingeschlossenen Kaffeepulverkuchen ausgeübt wird. Schliesslich wird eine einstellbare Menge an Brühwasser durch die Brühkammer geleitet und das so zubereitete Kaffeegetränk aufgefangen.

Dieses Verfahren ist allgemein bekannt, ebenso Kaffeemaschinen, die nach diesem Prinzip arbeiten. Beispiele dafür sind in WO-A-82/01120, DE-B-20 53 466 und DE-A-3316 157 zu finden. Das generell verfolgte Ziel ist dabei, mit einer möglichst guten Ausnutzung des Kaffeepulvers ein aromatisches Kaffeegetränk zu bereiten, dies möglichst unter Vermeidung einer Vielzahl manueller Operationen, vorzugsweise in wählbarer, unterschiedlicher Menge (eine oder zwei Tassen aufs Mal).

Die bekannten Verfahren der gattungsgemässen Art gehen im allgemeinen richtigerweise davon aus, dass zur Zubereitung z.B. einer Tasse Kaffee eine vorgegebene Menge an Kaffeepulver in eine Brühkammer eingefüllt, dieser Kaffeepulverkuchen mit einem vorgegebenen Anpressdruck des Kolbens verdichtet und eine vorgegebene Menge von heissem Brühwasser durch die Brühkammer geleitet werden muss. Mehr oder weniger automatisch arbeitende Maschinen verwirklichen ein solches Verfahren in der folgenden Art:

1. Ein Kaffeebohnen-Mahlwerk wird während einer gewissen Zeitdauer in Funktion gesetzt und produziert so eine gewisse, von der Einschaltzeitdauer abhängige Menge an Kaffeepulver.

2. Die so hergestellte (theoretisch bekannte und konstante) Kaffeepulvermenge wird in die Brühkammer mit bekanntem Volumen eingefüllt.

3. Ein Kolben wird in die Brühkammer eingefahren, um diese zu verschliessen, wobei der Einfahrweg des Kolbens in Abhängigkeit vom (theoretisch bekannten) Kaffeepulvervolumen in der Brühkammer erfolgt, mit dem Ziel, den Kaffeepulverkuchen unter Ausübung eines vorgegebenen Anpressdruckes zu verdichten.

4. Eine vorgegebene Menge von Brühwasser wird durch den verdichteten Kaffeepulverkuchen in der Brühkammer hindurchgeleitet und das so zubereitete Kaffeegetränk wird aufgefangen.

In der Praxis treten hierbei jedoch einige gravierende Nachteile auf:

- Eine konstante Mahldauer von Kaffeebohnen muss nicht unbedingt eine konstante Menge an gemahlenem Kaffeepulver ergeben. Das Verhältnis von Mahldauer zu resultierender Kaffeepulvermenge ist unter anderem von der Art und Qualität der verwendeten Kaffeebohnen, vom Zustand des Mahlwerks (Abnutzung etc.), von Netzspannungsschwankungen und dgl. abhängig.

- Ein konstanter Verschiebungsweg des Kolbens in die Brühkammer hinein resultiert nicht unbedingt in einem konstanten Anpressdrucks des Kolbens auf den Kaffeepulverkuchen in der Brühkammer, insbesondere dann nicht, wenn die vom Mahlwerk abgegebene Kaffeepulvermenge aus den vorstehend angegebenen Gründen Schwankungen unterworfen ist. Ausserdem ist der vorbestimmte Verschiebungsweg nur theoretisch "konstant"; in Tat und Wahrheit können auch hier beträchtliche Abweichungen auftreten, bedingt durch Unregelmässigkeiten im Antrieb, Abnutzung desselben etc.

- Der Mahlgrad des Kaffeepulvers, d.h. die Feinheit bzw. Körnigkeit desselben wird bei bekannten Verfahren nicht berücksichtigt. Dieser kann sich ersichtlicherweise ebenfalls ungewollt verändern, z.B. je nach Art und Qualität der Kaffeebohnen, infolge Abnützung des Mahlwerks und dgl. Eine Änderung des Mahlgrades schlägt sich aber unmittelbar in einer Veränderung der Getränkequalität nieder.

Bekannte Verfahren erfordern deshalb, auch wenn sie sogenannt "automatisch" arbeiten, einen teilweise beträchtlichen Aufwand an Überwachung, an Nachstellungen der Bedienungs- oder Einstellorgane der Kaffeemaschine bzw. einen vermehrten Reparatur- und Serviceaufwand, wenn keine Schwankungen oder Verschlechterung der Getränkequalität in Kauf genommen werden soll.

Es ist die Aufgabe der vorliegenden Erfindung, diese Nachteile zu vermeiden und ein Verfahren vorzuschlagen, das sich gleichsam selbsttätig reguliert, d.h. das die Zubereitung von Kaffeegetränken in stets gleichbleibender Qualität gewährleistet, ohne dass auf Schwankungen in der Kaffeebohnenbeschaffenheit, auf betriebsbedingte Funktionstoleranzen der Kaffeemaschine oder auf allmähliche Anützung einzelner Teile derselben geachtet werden muss.

Gemäss der Erfindung wird diese Aufgabe durch die im kennzeichnenden Teil des Patentanspruchs 1 definierten Merkmale ermöglicht:

Während eines ersten Kaffeezubereitungs-Zyklus wird eine vorgegebene Menge an Kaffeepulver in die Brühkammer eingefüllt und der Verschiebungsweg des Kolbens zur Erreichung eines vorbestimmten Sollwertes des Anpressdruckes auf den Kaffeepulverkuchen in der Brühkammer gemessen, der gemessene Wert dieses Verschiebungsweges wird mit einem vorgegebenen Sollwert des Verschiebungsweges verglichen, und bei einer ein bestimmtes Mass überschreitenden Abweichung des gemessenen Wertes des Verschiebungsweges vom Sollwert desselben wird die Menge des in die Brühkammer einzufüllenden Kaffeepulvers während eines der nachfolgenden Kaffezubereitungs-Zyklen verändert.

Mit dieser Massnahme wird erreicht, dass vor Beginn des Brühvorganges einer der wichtigsten Qualitätsparameter für ein einwandfreies Kaffeegetränk, nämlich der korrekte Anpressdruck des Kolbens auf den Kaffeepulverkuchen, eingehalten ist. Theoretisch muss dieser nach einem von der eingefüllten Kaffeepulvermenge abhängigen, vorausberechenbaren Verschiebeweg des Kolbens erreicht sein. Ist dies nicht der Fall, sei es, weil zuviel Kaffeepulver eingefüllt worden ist, sei es, weil zuwenig Kaffeepulver eingefüllt worden ist, oder sei es, weil der Kolben einen gegenüber dem vorausberechneten Verschiebeweg unterschiedlichen Weg zurückgelegt hat, wird der tatsächliche Kolbenverschiebeweg so korrigiert, dass der korrekte Anpressdruck erreicht ist. Der Ist-Wert des Verschiebewegs des Kolbens wird dabei mit dem vorausberechneten Sollwert verglichen, was zur Erfassung eines Abweichungswertes führt. Ist diese Abweichung nur minim, wird die Messung ignoriert und hat keinen weiteren Einfluss auf das Verfahren. Andernfalls wird der Wert der Abweichung gespeichert.

Falls im Verlauf aufeinanderfolgender, weiterer Zubereitungszyklen immer wieder festgestellt wird, dass der Ist-Wert der Kolbenverschiebung vom Soll-Wert in gleicher Tendenz und ähnlichem Mass abweicht, wird die Menge des in die Brühkammer einzufüllenden Kaffeepulvers geändert, um möglichst genau wieder auf den Soll-Wert der Kolbenverschiebung zu kommen.

Im allgemeinen hat es keinen Sinn, diese Nachregelungen bei der kleinsten Abweichung vom Soll-Wert vorzunehmen. Deshalb erfolgt die Veränderung der Menge des in die Brühkammer einzufüllenden Kaffeepulvers bei einer Weiterbildung des Verfahrens nur dann, wenn die genannte Abweichung des gemessenen Wertes vom Sollwert z.B. mehr als 10% beträgt.

Im weiteren ist es angezeigt, eine Nachregelung nicht sofort beim nächsten Zubereitungszyklus vorzunehmen, da es sich um eine vereinzelte Unregelmässigkeit handeln könnte, die sich nicht wiederholt. Deshalb wird bei einer Weiterbildung des Verfahrens vorgeschlagen, dass die Veränderung der Menge des in die Brühkammer einzufüllenden Kaffeepulvers im n-ten Zyklus der Kaffeezubereitung erfolgt, gezählt ab erstmaliger und unterbruchslos wiederholter Feststellung einer signifikanten Abweichung des gemessenen Wertes vom Sollwert, wobei n eine ganze Zahl zwischen 2 und 6 ist.

Im übrigen gehen weitere vorteilhafte Ausführungsarten des Verfahrens aus den abhängigen Patentansprüchen hervor.

Im folgenden wird das erfindungsgemässe Verfahren beispielsweise erläutert, mit Bezug auf eine in den beiliegenden Zeichnungen schematisch dargestellte Kaffeemaschine. Im einzelnen zeigen:

Fig. 1 eine diagrammartige Darstellung einer Kaffeemaschine, die nach dem Verfahren gemäss der Erfindung arbeitet und deren Kolbengruppe einen Schrittmotor zur Verschiebung des Kolbens in die Brühkammer aufweist;

Fig. 2 eine teilweise aufgeschnittene, schematische Seitenansicht der Kolbengruppe der Kaffeemaschine nach Fig. 1 in einer ersten Phase; und

Fig. 3 eine teilweise aufgeschnittene, schematische Seitenansicht der Kolbengruppe der Kaffeemaschine nach Fig. 1 in einer zweiten Phase.

In der nachfolgenden Beschreibung wird zunächst, anhand der Zeichnungen, eine zur Durchführung des erfindungsgemässen Verfahrens geeignete Kaffeemaschine erläutert; anschliessend wird das Verfahren anhand dieses Maschinenbeispiels ausführlich erklärt.

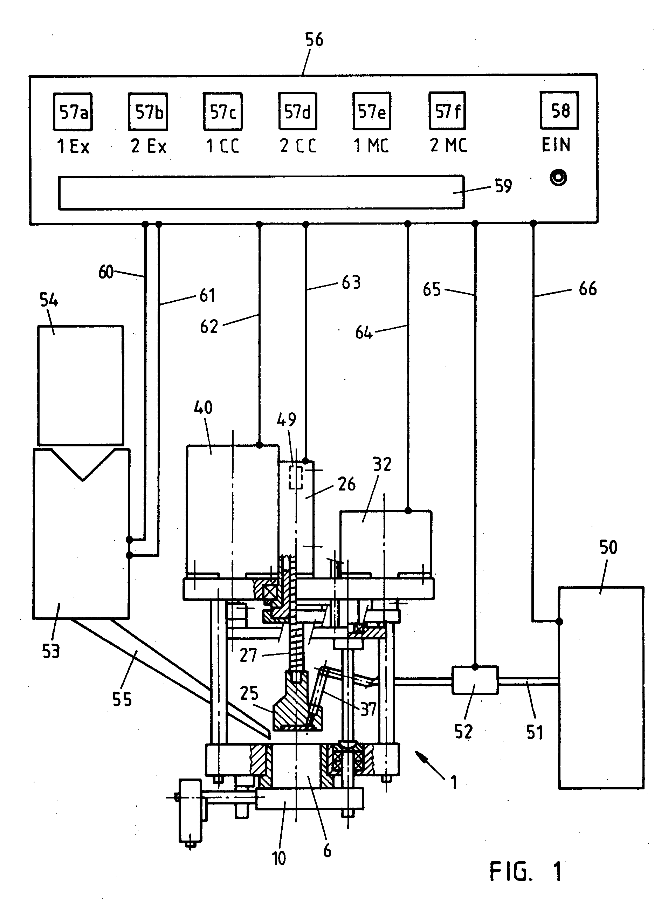

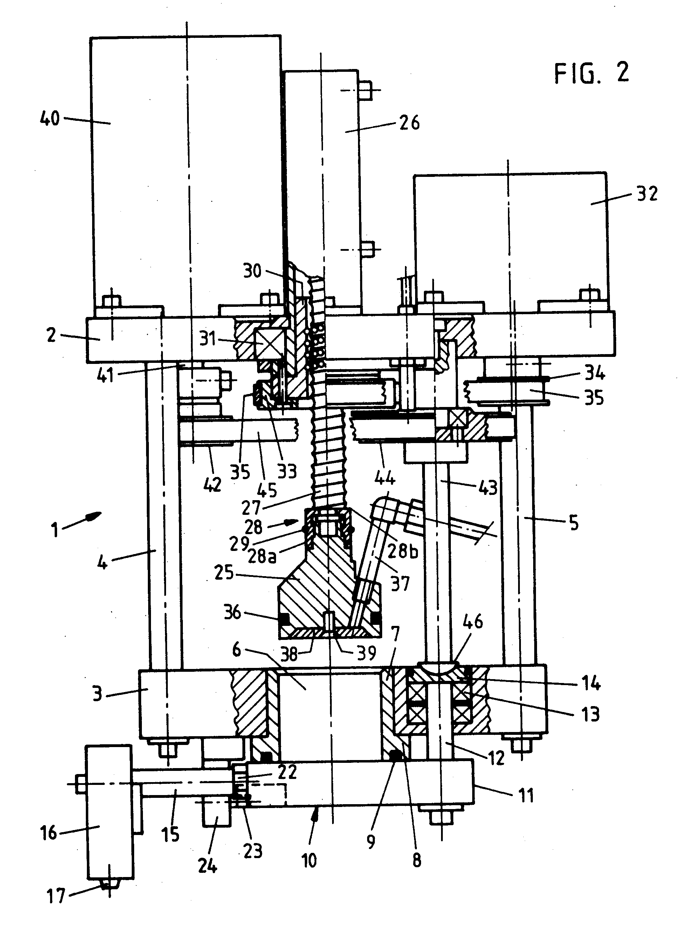

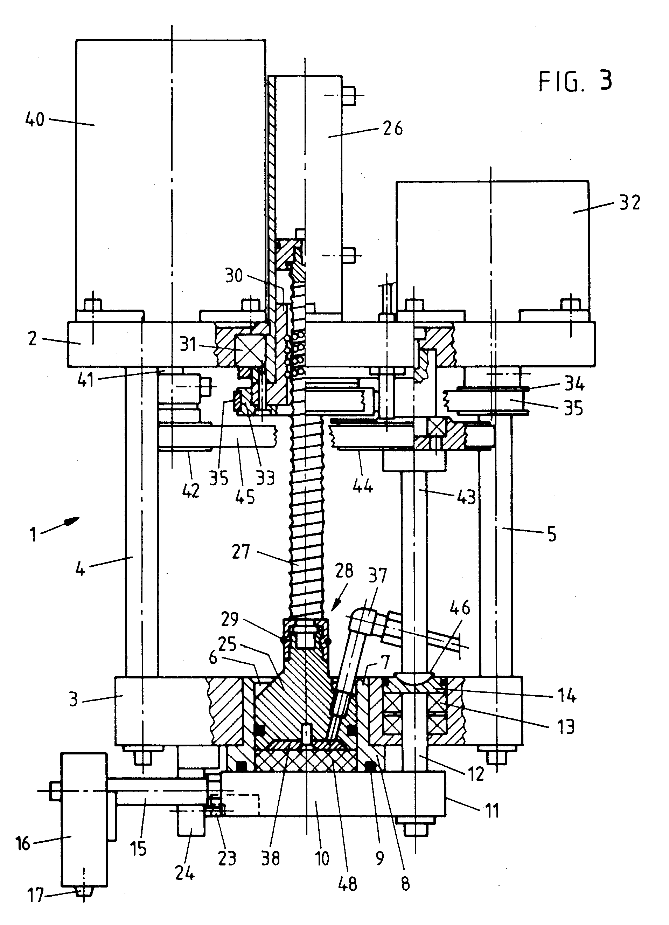

Die wesentlichen Teile der Kaffeemaschine sind rein schematisch in Fig. 1 dargestellt. Das Kernstück der Maschine ist durch ein Kolben-Zylinder-Aggregat 1 gebildet, auf dessen nähere Ausbildung noch im Zusammenhang mit Fig. 2 und 3 eingegangen werden wird. Dieses Kolben-Zylinder-Aggregat 1 umfasst unter anderem eine Brühkammer 6 zur Aufnahme des aufzubrühenden Kaffeepulvers, die unten durch ein Schliessglied 10 verschliessbar ist und in die von oben her ein verschiebbarer Kolben 25 einführbar ist, um das in die Brühkammer 6 eingefüllte Kaffeepulver zu verdichten. Der Antrieb des Kolbens 25 erfolgt durch einen Schrittmotor 32, der mit einem Kugelspindelantrieb wirkungsverbunden ist. Letzterer weist eine Kugelspindel 27 auf, an deren unterem Ende der Kolben 25 befestigt ist und die in einer Lagerung 26 aufgenommen ist. Die Lagerung 26 umfasst ein gestrichelt angedeutetes Druckmessglied 49, mittels welchem der von der Kolbenstirnfläche auf den Kaffeepulverkuchen ausgeübte Druck gemessen werden kann. Zum Öffnen und Schliessen der Unterseite der Brühkammer 6 ist zwecks Verschwenkung des Schliessgliedes 10 ein weiterer Schrittmotor 40 vorgesehen.

Weiter ist eine Wasseraufbereitungseinrichtung 50 vorhanden, die zur Bereitstellung des Brühwassers dient. Diese ist über eine Leitung 51 und über ein Durchfluss-Messglied 52 mit einem Brühwasseranschluss 37 des Kolbens 25 verbunden, um Brühwasser zum Kolben 25 zu leiten. Ein Kaffeebohnen-Mahlwerk 53, das mit einem Vorratsbehälter 54 für Kaffeebohnen versehen ist, ist über eine Zufuhrleitung 55 für gemahlenes Kaffeepulver mit der Kolben-Zylinder-Gruppe 1 derart verbunden, dass das gemahlene Kaffeepulver, bei zurückgezogenem Kolben 25, in die Brühkammer 6 fliesst. Schliesslich ist ein generell mit 56 bezeichnetes Steuergerät vorgesehen, welches für den gesamten Betriebsablauf bei der Zubereitung von Kaffee verantwortlich zeichnet. Auf die konstruktiven Einzelheiten dieses Steuergerätes braucht im Rahmen der vorliegenden Erfindung nicht näher eingegangen werden; es bietet sich an, hierfür eine spezifisch angepasste Form einer Mikroprozessor-Steuerung zu verwenden. Im Beispielsfall besitzt das Steuergerät sechs Programmtasten 57a - 57f, mittels welcher die Art und Menge des zuzubereitenden Kaffeegetränkes vorgewählt werden kann, eine Auslösetaste 58, mittels welcher der Zubereitungsvorgang ausgelöst wird, und ein Anzeigefeld 59, auf welchem unter anderem z.B. eine Fehlermeldung zur Anzeige gebracht werden kann.

Das Steuergerät 56 ist wie folgt mit den Komponenten der Kaffeemaschine verbunden:
- Über eine Leitung 60 mit dem Kaffeebohnen-Mahlwerk 53, über welche dieses ein- und ausgeschaltet wird;
- über eine Leitung 61 mit dem Kaffeebohen-Mahlwerk 53, über welche der Mahlgrad desselben eingestellt wird;
- über eine Leitung 62 mit dem Schrittmotor 40;
- über eine Leitung 63 mit dem Druckmessglied 49;
- über eine Leitung 64 mit dem Schrittmotor 32;
- über eine Leitung 65 mit dem Durchfluss-Messglied 52;
- über eine Leitung 66 mit der Brühwasser-Aufbereitungseinrichtung 50.

Die nähere Ausbildung des Kolben-Zylinder-Aggregates 1 geht aus den Fig. 2 und 3 hervor, in denen es in einer schematischen, teilweise aufgeschnittenen Seitenansicht in zwei verschiedenen, charakteristischen Phasen während seines Betriebs dargestellt ist.

Das Kolben-Zylinder-Aggregat 1 besitzt eine erste, obere Grundplatte 2 und eine zweite, untere Grundplatte 3, die mittels einer Anzahl von Verbindungsstangen 4, 5 im Abstand und parallel zueinander fest miteinander verbunden sind. Die zweite, untere Grundplatte 3 nimmt einen zylindrischen Hohlraum 6 auf, der als Brühkammer dient. Im Beispielsfall ist die Brühkammer durch das Innere einer in die zweite Grundplatte 3 eingelassenen, hohlzylindrischen Hülse 7 gebildet, die z.B. aus rostfreiem Stahl bestehen kann. Während die Hülse 7 oben bündig mit der Oberfläche der zweiten Grundplatte 3 abschliesst, besitzt sie andernends einen im Durchmesser vergrösserten Flansch 8, der über die untere Oberfläche der zweiten Grundplatte 3 hervorsteht. In die freie Stirnfläche des Flansches 8 ist eine Ringnut eingelassen, in die eine Ringdichtung 9, z.B. aus Kautschuk oder Kunststoff, eingelegt ist.

Ferner ist an der zweiten Grundplatte 3 ein generell mit 10 bezeichnetes Schliessglied gelagert, welches im wesentlichen plattenförmige Gestalt hat und welches eine exzentrisch, d.h. nahe seines Randes 11 angeordnete, senkrecht gegen oben abstehende Welle 12 besitzt, deren freies Ende in einer Lageranordnung 13 aufgenommen ist. Die Lageranordnung 13, die z.B. zwei Kugellager umfassen kann, ist in einer Ausnehmung 14 in der zweiten Grundplatte 3 vorgesehen. Die Ausnehmung 14 liegt neben der Hülse 7, wobei die Mittelachse der Ausnehmung 14 und damit die Drehachse der Lageranordnung 13 parallel zur Mittelachse der zylindrischen Hülse 7 verläuft. Die Anordnung ist ferner so getroffen, dass die obere Fläche des Schliessgliedes 10 auf der freien Stirnfläche des Flansches 8 der Hülse 7 aufliegt. Wenn das Schliessglied 10 in der gezeigten Verschlußstellung ist, wird die Brühkammer 6 von unten her verschloßen, wobei die Ringdichtung 9 für einen druckdichten Verschluss der Brühkammer 6 sorgt.

An der der Welle 12 gegenüberliegenden Seite des Schliessgliedes 10 ist über ein Verbindungsrohr 15 ein Getränkeauslasskopf 16 angeschlossen, der zwei Auslassmündungen 17 besitzt. Diese sind über interne Kanäle (nicht gezeigt) an einen an der Oberseite des Schliessgliedes 10 angeordneten, gegen oben offenen Ringkanal angeschlossen, der durch ein Microsieb bedeckt sein kann. Die Verbindung zwischen Rohr 15 und dem Ringkanal erfolgt durch einen im Inneren des Schliessgliedes angeordneten, tangential in den Ringkanal mündenden und gegen das Verbindungsrohr 15 führenden Kanal (nicht dargestellt). Ferner sind an der zweiten Grundplatte 3 und dem Schliessglied 10 Arretiermittel vorgesehen sind, die das Schliessglied 10, wenn es in seiner Verschlußstellung ist, gegen Verschiebung in Richtung der Mittelachse der Brühkammer 6 sichern. Im Beispielsfall umfassen diese Arretiermittel einerseits einen vom Schliessglied radial abstehenden Steg 22, der bezüglich des Zentrums des Ringkanals diametral der Lagerung der Welle 12 gegenüberliegt. Dieser Steg 22 arbeitet mit einem Vorsprung 23 zusammen, der an einem von der Unterseite der zweiten Grundplatte 3 abstehenden Steg 24 angebracht ist, in der Weise, dass beim Verschwenken des Schliessgliedes 10 um die Welle 12 in die Verschlußstellung die Unterseite des Steges

4

EP 0 245 197 B1

22 die Oberseite des Vorsprungs 23 übergreift. Zweckmässigerweise können die Unterseite des Steges 22 und/oder die Oberseite des Vorsprungs 23 etwas geneigt ausgebildet sein, um während des letzten Abschnitts der Schwenkbewegung des Schliessgliedes 10 ein Anpressen desselben an die Unterseite der Hülse 7 und damit an die Ringdichtung 9 zu bewirken, um einen dichten Verschluss der Brühkammer 6 zu gewährleisten.

An der ersten, oberen Grundplatte 2 ist ein Kolben 25 höhenverstellbar gelagert. Zu diesem Zwecke trägt die Oberseite der ersten Grundplatte 2 ein Führungs- und Lagerorgan 26 für eine Kugelspindel 27, die an ihrem unteren, freien Ende den Kolben 25 trägt. In diesem Führungs- und Lagerorgan 26 ist ebenfalls das Druckmessglied 49 aufgenommen, welches den vom Kolben 25 auf den Kaffeepulverkuchen 48 ausgeübten Druck misst, wenn sich der Kolben 25 in der in Fig. 3 gezeigten Stellung befindet.

Die Verbindung zwischen der Kugelspindel 27 und dem Kolben 25 erfolgt mit Hilfe eines lösbaren Kupplungselementes 28, das zwei im wesentlichen halbzylindrische Kupplungsschalen 28a und 28b umfasst. Diese übergreifen nicht näher bezeichnete Ringwulste bzw. Ringnuten am Ende der Kugelspindel 27 bzw. am oberen Ende des Kolbens 25 mit korrespondierend ausgebildeten Ringnuten bzw. Ringwulsten, sodass eine formschlüssige Verbindung zwischen Kolben 25 und Spindel 27 gegeben ist. Für den Zusammenhalt der beiden Schalenhälften 28a und 28b sorgt ein elastisches Klemmorgan, z.B. ein Gummiring 29.

Die Höhenverstellung der Spindel 27 und damit des Kolbens 25 erfolgt über eine in der ersten Grundplatte 2 drehbar, aber höhenfixiert gelagerte Kugelmutter 30, z.B. mittels eines Lagers 31. Die Konstruktion eines solchen Kugelspindelantriebs darf als bekannt vorausgesetzt werden und braucht hier nicht im einzelnen erläutert zu werden. Wesentlich ist, dass bei einer Rotation der Kugelmutter 30 eine weitestgehend reibungs- und spielfreie translatorische Verschiebung der Spindel 27 entlang deren Achse erfolgt.

Der Antrieb der Kugelmutter 30 erfolgt mit Hilfe eines Schrittmotors 32, der ebenfalls auf der ersten, oberen Grundplatte 2 gelagert ist. Zu diesem Zwecke ist die Kugelmutter 30 mit einem drehfest angebrachten, über die Unterseite der ersten Grundplatte 2 hervorstehenden Pulley 33 und der Schrittmotor 32 mit einem ebenfalls über die Unterseite der ersten Grundplatte 2 hervorstehenden Pulley 34 versehen. Die beiden Pulleys 33 und 34 sind mit einem Zahnriemen 35 miteinander verbunden, der eine weitgehend spiel- und schlupffreie Übertragung des Drehmomentes vom Schrittmotor 32 auf die Kugelmutter 30 gewährleistet.

Die Lagerung des Kolbens 25 ist so gewählt, dass dessen Längsmittelachse mit der Längsmittelachse der Brühkammer 6 zusammenfällt. Eine Betätigung des Schrittmotors 32, ausgehend von der in Fig. 2 gezeigten Lage des Kolbens, in der korrekten Drehrichtung wird also bewirken, dass sich der Kolben 25 zur Brühkammer 6 hin absenkt und schliesslich in diese eintritt. Der Aussendurchmesser des Kolbens 25 entspricht dabei, mit geringem Spiel, dem Innendurchmesser der Brühkammer 6, wobei zur Abdichtung zusätzlich ein Ringdichtelement 36 vorgesehen ist, welches in einer um die Mantelfläche des Kolbens 25 verlaufenden Ringnut aufgenommen ist. Ferner besitzt der Kolben einen Brühwasseranschluss 37, der an die in Fig. 1 gezeigte Brühwasser-Aufbereitungseinrichtung 50 angeschlossen ist. Der Brühwasseranschluss 37 mündet im Inneren des Kolbens in ein stirnseitig angebrachtes Verteilorgan 38, welches für einen über die Stirnfläche des Kolbens 25 gleichmässig verteilten Brühwasseraustritt sorgt. Das Verteilorgan 38 ist zweckmässigerweise leicht lösbar, z.B. mittels einer Schraube 39, am Kolben 25 befestigt, um eine Reinigung zu vereinfachen.

Zur Verschwenkung des Schliessorganes 10 ist ein weiterer Schrittmotor 40 vorgesehen, der ebenfalls auf der ersten Grundplatte 2 angeordnet ist. Die Abtriebswelle 41 des Schrittmotors 40 erstreckt sich durch eine Öffnung in der Grundplatte 2 gegen unten und trägt ein endseitig angebrachtes Pulley 42. Ferner ist an der ersten Grundplatte 2 eine Antriebswelle 43 gelagert, die koaxial zur Welle 12 des Schliessgliedes 10 angeordnet ist und die ein Pulley 44 trägt, wobei das Pulley 42 des Schrittmotors 40 über einen Zahnriemen 45 mit dem Pulley 44 weitgehend spiel- und schlupffrei gekoppelt ist. Das untere Ende der Antriebswelle 43 ist mittels einer Kupplung 46 mit der drehbar gelagerten Welle 12 des Schliessgliedes 10 gekoppelt, um letzteres durch Betätigung des Schrittmotors 40 verschwenken zu können.

Bevor im einzelnen auf das Zubereitungsverfahren eingegangen wird, mögen die Voraussetzungen des hier gewählten Beispiels noch etwas ausführlicher dargestellt sein. Es versteht sich, dass von Fall zu Fall andere Varianten zweckmässiger sein können; dies ändert aber nichts am Grundprinzip des Zubereitungsverfahrens.

Die hier diskutierte Maschine ist zur Zubereitung von sechs in Qualität und Menge unterschiedlichen Kaffeegetränken bestimmt. Zu diesem Zweck besitzt das Steuergerät sechs Programmtasten 57a bis 57f. Jedem Zubereitungsprogramm sind verschiedene Soll-Parameter zugeordnet, die in der nachfolgenden Tabelle zusammengefasst sind.

5

|  | Exp. | 2 Exp. | 1 CC | 2 CC | 1 MC | 2 MC |
|---|---|---|---|---|---|---|
| Kaffepulver (gr.) | 9 | 16 | 8 | 14 | 7 | 12 |
| Anzahl Schritte | 1556 | 1400 | 1578 | 1444 | 1600 | 1488 |
| Anpressdruck (kp) | 80 | 50 | 60 | 30 | 50 | 25 |
| Wassermenge (cm$^3$) | 70 | 140 | 150 | 300 | 120 | 240 |
| Auslaufzeit (sec.) | 15 | 25 | 20 | 30 | 15 | 25 |

In der obigen Tabelle bedeuten:

| 1 Exp. | 1 Tasse Expresso |
|---|---|
| 2 Exp. | 2 Tassen Expresso |
| 1 CC | 1 Tasse Caffee Crème |
| 2 CC | 2 Tassen Caffee Crème |
| 1 MC | 1 Tasse Milchkaffee |
| 2 MC | 2 Tassen Milchkaffee |
| Anzahl Schritte | Einschalt-Intervall des Schrittmotors, ausgehend von der oberen Endlage des Kolbens. |

Wie man aus der Tabelle sieht, ist den unterschiedlichen Getränkearten bzw. Getränkemengen jeweils eine ganz spezifische Gruppe von Soll-Parametern zugeordnet, die im Steuergerät 56 programmiert werden. Diese Parameter beziehen sich auf den Idealfall, d.h. wenn die Maschine neu, also abnutzungsfrei ist, eine bestimmte Kaffesorte bzw. -qualität verwendet wird, die korrekte Netzspannung vorhanden ist usw. Diese Bedingungen können aber in der Praxis nicht immer erfüllt werden.

Die nachfolgenden Beispiele gehen von der Voraussetzung aus, dass die Kaffeemaschine, namentlich das Steuergerät 56, werksseitig programmiert worden ist, unter der Annahme, dass die Nenn-Netzspannung vorliegt und dass eine bestimmte Kaffeebohnen-Sorte zur Verwendung gelangt. Weiter gilt selbstverständlich, dass die nachfolgenden Beispiele mit entsprechenden Parametern auf sämtliche beispielsweise aufgeführten Getränkearten und -mengen anwendbar sind.

BEISPIEL 1

Es soll eine Tasse Caffee Crème zubereitet werden. Dazu wird die Programm-Taste 57c und anschliessend die Auslösetaste 58 gedrückt. Das Steuergerät 56 setzt über Leitung 60 das Kaffeebohnen-Mahlwerk 53 während einer vorgegebenen Zeit in Gang, um aus Kaffeebohnen, die aus dem Vorratsbehälter 54 zugeführt werden, 8 gr. Kaffepulver herzustellen und über die Zuführleitung 55 in die Brühkammer 6 abzugeben. Nun wird der Schrittmotor über Leitung 62 so lange in Betrieb gesetzt, bis er 1578 Schritte zurückgelegt hat. Gleichzeitig wird über Leitung 63 der Druck gemessen, der vom Kolben 25 auf den Kaffeepulverkuchen 48 (Fig. 3) ausgeübt wird. Nach 1578 Schritten ist der Soll-Anpressdruck von 60 kp erreicht. Anschliessend bewirkt das Steuergerät über die Leitung 66, dass eine in der Brühwasser-Aufbereitungseinrichtung 50 enthaltene Pumpe Brühwasser durch die Leitung 51 in die Brühkammer 6 hineinpresst. Die Durchflussmenge des Brühwassers wird durch das Durchfluss-Messglied 52 gemessen und über Leitung 65 an das Steuergerät gemeldet. Sobald die vorgesehene Menge von 150 cm$^3$ Brühwasser das Messglied 52 passiert hat, wird die Zufuhr von Brühwasser unterbrochen. Gleichzeitig wurde im Steuergerät die Zeit gemessen, während welcher die Menge von 150 cm$^3$ Brühwasser in den Brühraum 6 gefördert wurde, und es wurden 20 sec. ermittelt. Das Steuergerät stellt fest, dass alles in Ordnung ist; somit werden keinerlei Änderungen der Parameter veranlasst.

BEISPIEL 2

Es soll eine Tasse Caffee Crème zubereitet werden. Dazu wird die Programm-Taste 57c und anschliessend die Auslösetaste 58 gedrückt. Das Steuergerät 56 setzt über Leitung 60 das Kaffeebohnen-Mahlwerk 53 während einer vorgegebenen Zeit in Gang, um aus Kaffeebohnen, die aus dem Vorratsbehälter 54 zugeführt werden, 8 gr. Kaffepulver herzustellen und über die Zuführleitung 55 in die Brühkammer 6 abzugeben. Nun wird der Schrittmotor über Leitung 62 so lange in Betrieb gesetzt, bis er 1578 Schritte zurückgelegt hat. Gleichzeitig wird über Leitung 63 der Druck gemessen, der vom Kolben 25 auf den Kaffeepulverkuchen 48 (Fig. 3) ausgeübt wird. Nach 1578 Schritten ist der Soll-Anpressdruck von 60 kp noch nicht erreicht. Deshalb wird der Schrittmotor 32 über Leitung 62 weiter betätigt, so lange, bis der Soll-Anpressdruck von 60 kp erreicht ist und die Anzahl der dazu benötigten Schritte wird gezählt und gespeichert. Anschliessend bewirkt das Steuergerät über die Leitung 66, dass eine in der Brühwasser-Aufbereitungseinrichtung 50 enthaltene Pumpe Brühwasser durch die Leitung 51 in die Brühkammer 6 hineinpresst. Die Durchflussmenge des Brühwassers wird durch das Durchfluss-Messglied 52 gemessen und über Leitung 65 an das Steuergerät gemeldet. Sobald die vorgesehene Menge von 150 cm$^3$ Brühwasser das Messglied 52 passiert hat, wird die Zufuhr von Brühwasser unterbrochen. Gleichzeitig wurde im Steuergerät die Zeit gemessen, während welcher die Menge von 150 cm$^3$ Brühwasser in den Brühraum 6 gefördert wurde, und es wurden 20 sec. ermittelt. Das Steuergerät stellt fest, dass die Mahldauer des Kaffeebohnen-Mahlwerks 53 nicht ausgereicht hat, um die benötigte Menge von 8 gr. Kaffeepulver bereitzustellen.

Wenn die Anzahl der zusätzlich erforderlichen Schritte bis zum Erreichen des Solldrucks von 60 kp ein bestimmtes Mass überschritten hat oder nicht, wird zunächst die Einleitung einer Änderungsmassnahme während einer der nachfolgenden Zubereitungszyklen vorgemerkt. Somit sind zwei Störungszustände zu unterscheiden:

- Es handelt sich um eine vereinzelt vorkommende Störung, z.B. im Mahlwerk 53 oder bei der Zufuhr des Kaffeepulvers durch die Leitung 55; beim nächsten Zubereitungszyklus ist wieder alles wie im Beispiel 1 und es besteht keine Veranlassung, die Betriebs-Parameter zu ändern.
- Es handelt sich um eine nacheinander und wiederholt vorkommende Störung, indem die Zustände gemäss Beispiel 2 in mehreren, nacheinanderfolgenden Zubereitungszyklen betrags- und richtungsmässig ähnlich oder gleich auftreten.

In diesem zweiten Fall wird das Auftreten der Störung bei jedem Zubereitungszyklus registriert, und wenn die gleiche Störung, im Beispielsfall die Zufuhr einer zu geringen Menge von Kaffeepulver, z.B. drei-, vier oder fünfmal nacheinander registriert wurde, ändert das Steuergerät 56 die Einschaltdauer des Mahlwerks 53 im positiven Sinne, d.h. in Richtung einer längeren Mahldauer der Kaffeebohnen, bis der erwünschte Sollzustand wieder erreicht ist.

Es versteht sich, dass sinngemäss das gleiche gilt, wenn innerhalb der vorgegebenen Mahldauer zuviel Kaffeepulver hergestellt wird. Dann wird die Mahldauer des Mahlwerks 53 verkürzt, um auf den Sollwert zu kommen.

Solche Störungen, die gemäss der Erfindung selbsttätig ausgeglichen bzw. behoben werden, können durch Verwendung unterschiedlicher Kaffeesorten bzw. -qualitäten, durch Alterung des Mahlwerks 53, durch Netzspannungs-Schwankungen und dgl. entstehen. Eine Änderung bzw. Nachregelung erfolgt jedoch nur dann, wenn ein bestimmter Grenzwert überschritten wird. Wenn im Beispiel 2 zur Erreichung des Soll-Anpressdruckes statt der vorgegebenen 1578 Schritte vielleicht nur 1550 Schritte oder vielleicht 1610 Schritte erforderlich waren, wird dies als im normalen Toleranzfeld liegend betrachtet, mit der Folge, dass keine Änderung der Parameter vorgemerkt wird. Ein sinnvolles Toleranzfeld dürfte etwa plus/minus 10% der Sollwerte umfassen.

BEISPIEL 3

Es soll eine Tasse Caffee Crème zubereitet werden. Dazu wird die Programm-Taste 57c und anschliessend die Auslösetaste 58 gedrückt. Das Steuergerät 56 setzt über Leitung 60 das Kaffeebohnen-Mahlwerk 53 während einer vorgegebenen Zeit in Gang, um aus Kaffeebohnen, die aus dem Vorratsbehälter 54 zugeführt werden, 8 gr. Kaffepulver herzustellen und über die Zuführleitung 55 in die Brühkammer 6 abzugeben. Nun wird der Schrittmotor über Leitung 62 so lange in Betrieb gesetzt, bis er 1578 Schritte zurückgelegt hat. Gleichzeitig wird über Leitung 63 der Druck gemessen, der vom Kolben 25 auf den Kaffeepulverkuchen 48 (Fig. 3) ausgeübt wird. Nach 1578 Schritten ist der Soll-Anpressdruck von 60 kp erreicht. Anschliessend bewirkt das Steuergerät über die Leitung 66, dass eine in der Brühwasser-Aufbereitungseinrichtung 50 enthaltene Pumpe Brühwasser durch die Leitung 51 in die Brühkammer 6 hineinpresst. Die Durchflussmenge des Brühwassers wird durch das Durchfluss-Messglied 52 gemessen und über Leitung 65 an das Steuergerät gemeldet. Sobald die vorgesehene Menge von 150 cm$^3$ Brühwasser das Messglied 52 passiert hat, wird die Zufuhr von Brühwasser unterbrochen. Gleichzeitig wurde im Steuergerät die Zeit gemessen, während welcher die Menge von 150 cm$^3$ Brühwasser in den Brühraum 6 gefördert wurde, und es wurden 30 sec. ermittelt. Das Steuergerät stellt fest, dass eine zu lange Zeitdauer benötigt worden ist, um das Brühwasser durch die Kammer 6 zu leiten und merkt dies als potentielle Störung vor, die eventuell korrigiert werden muss.

Der Grund dafür ist im allgemeinan darin zu sehen, dass das Kaffeepulver zu fein gemahlen worden ist. In entsprechender Weise, wie vorstehend erklärt, wird dieser Störungsvorgang registriert. Wenn er nur einmal auftritt, wird keine Änderung der Parameter veranlasst; wenn hingegen die tendenziell gleiche Störung, einen gewissen Grenzwert überschreitend, mehrmahls nacheinander auftritt, wird über Leitung 61 der Mahlgrad des Mahlwerks 53 in Richtung "grob" verstellt. Diese Verstellung erfolgt aber wiederum erst nach z.B. dem dritten, vierten oder fünften Zubereitungszyklus.

Im praktischen Betrieb kann natürlich eine Kombination der Störungszustände gemäss Beispiel 2 und 3 vorkommen. Deshalb versteht es sich, dass im Normalfall eine Kombination der beiden Nachregelungsmechanismen angewendet wird: In ein und demselben Zubereitungszyklus wird nacheinander die Abweichung des Verschiebungsweges des Kolbens vom Sollwert und die Abweichung der Durchlaufzeit des Brühwassers vom Sollwert gemessen, registriert, gegebenenfalls gespeichert und falls erforderlich in einem der nachfolgenden Zyklen korrigiert. Je nach Anwendungsfall kann dabei z.B. ein falscher Mahlgrad schon beim dritten oder vierten, nachfolgenden Zyklus und die unkorrekte Kaffeepulvermenge erst beim vierten oder fünften, nachfolgenden Zyklus korrigiert werden, d.h. die beiden Regelkreise können unabhängig voneinander arbeiten.

Wenn bedeutende Abweichungen vom Sollwert festgestellt werden, d.h. wenn die ermittelte Abweichung eines Parameters vom Sollwert ein bestimmtes Grenzmass überschreitet, lässt das Anzeigefeld 59 eine Fehlermeldung erscheinen. So ist z.B. denkbar, dass das Mahlwerk 53 nur äusserst wenig oder gar kein Kaffeepulver liefert und dass der Schrittmotor 32 eine unverhältnismässig grosse Anzahl von Schritten benötigt, um den vorgegebenen Anpressdruck zu erreichen oder diesen überhaupt nicht erreicht; dann erscheint im Anzeigefeld 59 z.B. die Meldung "MAHLWERK DEFEKT" oder "VORRATSBEHÄLTER LEER". Wenn andererseits die Brühwasser-Aufbereitungseinrichtung 50 nicht richtig funktioniert, d.h. wenn das Messglied 52 auch nach unverhältnismässig langer Zeit das Durchlaufen der vorgegebenen Wassermenge noch nicht registriert hat, kann z.B. die Meldung "WASSERBEHÄLTER LEER" oder "PUMPE DEFEKT" erscheinen.

Im Rahmen der Erfindung und der vorstehend erläuterten Beispiele sind selbstverständlich zahlreiche Variationen, Weiterbildungen und Modifikationen möglich. Wesentlich ist aber nach dem Grundgedanken der Erfindung, dass nur sporadisch oder vereinzelt auftretende sowie kleinere Abweichungen vom Sollzustand unbeachtet gelassen werden und dass wiederholt auftretende Abweichungen, die ein bestimmtes, vorwählbares Mass tendenziell gleich übersteigen, z.B. infolge Abnützung, anderer Kaffequalität und dgl. erkannt und selbstätig korrigiert werden. Damit ist ein verminderter Serviceaufwand und eine stets gleichbleibende Getränkequalität gewährleistet.

**Patentansprüche**

1. Verfahren zur Zubereitung von Kaffee mittels einer, insbesondere programmgesteuerten, Kaffeemaschine, die ein Kaffeebohnen-Mahlwerk, eine durch einen verschiebbaren Kolben verschliessbare, im Volumen veränderliche Brühkammer zur Aufnahme eines aufzubrühenden Kaffeepulverkuchens und eine Brühwasserquelle aufweist, bei welchem Verfahren Kaffeebohnen mit einem einstellbaren Feinheitsgrad zu Kaffeepulver gemahlen werden, das Kaffeepulver in einstellbarer Menge in die Brühkammer eingefüllt wird, die Brühkammer verschlossen und deren Volumen durch Verschiebung des Kolbens derart verkleinert wird, dass ein einstellbarer Druck auf den eingeschlossenen Kaffeepulverkuchen ausgeübt wird, und wobei schliesslich eine einstellbare Menge an Brühwasser durch die Brühkammer geleitet und das so zubereitete Kaffeegetränk aufgefangen wird, dadurch gekennzeichnet, dass während eines ersten Kaffeezubereitungs-Zyklus eine vorgegebene Menge an Kaffeepulver in die Brühkammer eingefüllt und der Verschiebungsweg des Kolbens zur Erreichung eines vorbestimmten Sollwertes des Anpressdruckes auf den Kaffeepulverkuchen in der Brühkammer gemessen wird, dass der gemessene Wert dieses Verschiebungsweges mit einem vorgegebenen Sollwert des Verschiebungsweges verglichen wird, und dass, bei einer ein bestimmtes Mass überschreitenden Abweichung des gemessenen Wertes des Verschiebungsweges vom Sollwert desselben, die Menge des in die Brühkammer einzufüllenden Kaffeepulvers während eines der nachfolgenden Kaffezubereitungs-Zyklen verändert wird.

2. Verfahren nach Patentanspruch 1, dadurch gekennzeichnet, dass die Veränderung der Menge des in die Brühkammer einzufüllenden Kaffeepulvers nur erfolgt, wenn die genannte Abweichung des gemessenen Wertes vom Sollwert mehr als 10% beträgt.

3. Verfahren nach den Patentansprüchen 1 oder 2, dadurch gekennzeichnet, dass die Veränderung der Menge des in die Brühkammer einzufüllenden Kaffeepulvers im n-ten Zyklus der Kaffeezubereitung erfolgt, gezählt ab erstmaliger und unterbruchslos wiederholter Feststellung der genannten Abweichung des gemessenen Wertes vom Sollwert, wobei n eine ganze Zahl zwischen 2 und 6 ist.

**4.** Verfahren nach einem der Patentansprüche 1 bis 3, dadurch gekennzeichnet, dass beim Erreichen eines vorgegebenen Grenzmasses der festgestellten Abweichung zwischen gemessenem Wert und Sollwert der Zubereitungs-Zyklus unterbrochen wird und eine Fehlermeldung erfolgt.

**5.** Verfahren nach einem der vorangehenden Patentansprüche, dadurch gekennzeichnet, dass die Erfassung der Abweichung des Verschiebungsweges des Kolbens von einem vorgegebenen Sollwert in jedem Kaffeezubereitungs-Zyklus gemessen sowie gespeichert wird, und dass die Anzahl der nacheinander gemessenen, ein bestimmtes Mass überschreitenden Abweichungen, gezählt wird.

**6.** Verfahren nach Patentanspruch 1, in welchem zur Verschiebung des Kolbens ein Schrittmotor verwendet wird, dadurch gekennzeichnet, dass die Anzahl der Schritte gezählt wird, die der Schrittmotor bis zum Erreichen des Anpressdruck-Sollwertes des Kolbens auf dem Kaffeepulverkuchen zurücklegen muss, und dass diese Schrittzahl mit einem vorgegebenen Schrittzahl-Sollwert verglichen wird.

**7.** Verfahren nach einem der vorangehenden Patentansprüche, dadurch gekennzeichnet, dass der absolute Wert des Anpressdruckes des Kolbens auf den Kaffeepulverkuchen an der dem Kolben zugeordneten Kolbenstange gemessen wird.

**Claims**

**1.** Process for making coffee by means of a coffee machine, particularly a program-controlled coffee machine, which comprises a coffee bean grinding section, a brewing compartment for receiving compressed coffee powder to be brewed which compartment can be closed by means of a sliding piston and whose volume can be altered and a hot water supply, during which process coffee beans are ground to an adjustable degree of fineness to produce coffee powder, an adjustable quantity of coffee powder is fed into the brewing compartment, the brewing compartment is closed and its volume is reduced using the sliding piston in such a way that adjustable pressure is exerted on the compressed coffee powder, with an adjustable amount of hot water finally being fed through the brewing compartment and coffee thus made being collected, characterized in that during the first coffee-making cycle a pre-set quantity of coffee powder is fed into the brewing compartment, and the piston path is measured until a pre-determined desired value in respect of the pressure acting on the compressed coffee powder in the brewing compartmen is achieved, in that the measured value of this path is compared with a predetermined desired value of the path and in that in the event that the measured value of the path deviates more than a specified degree from the desired value, the quantity of coffee powder to be fed into the brewing compartment is altered during one of the subsequent coffee-making cycles.

**2.** Process according to claim 1 characterized in that the quantity of coffee powder to be fed into the brewing compartment is only altered if the said deviation of the measured value from the desired value is more than 10%.

**3.** Process according to claim 1 or 2, characterized in that the quantity of coffee to be fed into the brewing compartment is altered in coffee-making cycle number n, counted from the initial and continuously repeated ascertainment of the said deviation of the measured value from the desired value, where n is an integer between 2 and 6.

**4.** Process according to any one of claims 1 to 3 characterized in that when a predetermined limit of the ascertained discrepancy between the measured value and the desired value is reached, the coffee-making cycle is interrupted and an error message ensues.

**5.** Process according to any one of the preceding claims characterized in that the information recorded concerning the deviation of the piston path from a predetermined desired value is measured and stored in every coffee-making cycle, and in that the numer of deviations measured in succession which exceed a specified degree is added up.

**6.** Process according to claim 1 in which a stepping motor is used to slide the piston, characterized in that the number of steps is counted, which the stepping motor has to cover until the desired value of the piston pressure acting on the compressed coffee powder is reached, and in that this number of steps is compared with a predetermined desired number of steps.

7. Process according to any one of the preceding claims characterized in that the absolute value of the piston pressure acting on the compressed coffee powder is measured at the piston rod related to the piston.

**Revendications**

1. Procédé de préparation de café au moyen d'une machine à café, notamment commandée par programme, laquelle présente un broyeur de café en grain, une chambre d'échaudage pouvant être fermée et pouvant avoir son volume modifié par un piston déplaçable, cette chambre recevant un gâteau de poudre de café à échauder, et une source d'eau d'échaudage, procédé dans lequel des grains de café sont moulus en poudre avec un degré de finesse réglable, la poudre de café est introduite en quantité réglable dans la chambre d'échaudage, la chambre d'échaudage est fermée et son volume est diminué par déplacement du piston de manière à exercer une pression réglable sur le gâteau de poudre de café enfermé, une quantité réglable d'eau d'échaudage est enfin amenée à passer par la chambre d'échaudage et le breuvage ainsi préparé est recueilli, caractérisé par le fait qu'au cours d'un premier cycle de préparation de café on introduit une quantité prédéterminée de poudre de café dans la chambre d'échaudage et l'on mesure la course de déplacement du piston nécessaire pour atteindre une valeur théorique prédéterminée de la pression de serrage exercée sur le gâteau de poudre de café dans la chambre d'échaudage, par le fait que l'on compare la valeur mesurée de cette course de déplacement à une valeur théorique prédéterminée de la course de déplacement, et par le fait que, dans le cas où l'écart entre la valeur mesurée de la course de déplacement et sa valeur théorique excède une mesure déterminée, on modifie, pendant l'un des cycles de préparation de café suivants, la quantité de poudre de café à introduire dans la chambre d'échaudage.

2. Procédé selon revendication 1, caractérisé par le fait que la modification de la quantité de poudre de café à introduire dans la chambre d'échaudage n'est effectuée que si ledit écart entre valeur mesurée et valeur théorique excède 10%.

3. Procédé selon la revendication 1 ou 2, caractérisé par le fait que la modification de la quantité de poudre de café à introduire dans la chambre d'échaudage est effectuée lors du cycle de préparation de café qui est le nième à partir de la première constatation, réitérée sans discontinuité, dudit écart entre valeur mesurée et valeur théorique, n étant un nombre entier entre 2 et 6.

4. Procédé selon l'une des revendications 1 à 3, caractérisé par le fait que dans le cas où l'écart constaté entre valeur mesurée et valeur théorique atteint une valeur théorique prédéterminée, on interrompt le cycle de préparation et l'on signale un défaut.

5. Procédé selon l'une des revendications précédentes, caractérisé par le fait que, lors de chaque cycle de préparation de café, on lit, mesure et mémorise l'écart entre la course de déplacement du piston et une valeur théorique prédéterminée, et par le fait que l'on compte le nombre des écarts successifs mesurés dépassant une valeur déterminée.

6. Procédé selon revendication 1, dans lequel un moteur pas à pas est utilisé pour déplacer le piston, caractérisé par le fait que l'on compte les pas que le moteur pas à pas doit accomplir jusqu'à ce que la pression d'appui du piston sur le gâteau de poudre de café atteigne sa valeur théorique, et par le fait que l'on compare ce nombre de pas à une valeur théorique, prédéterminée, de nombre de pas.

7. Procédé selon l'une des revendications précédentes, caractérisé par le fait que c'est sur la tige du piston que l'on mesure la valeur absolue de la pression d'appui du piston sur le gâteau de poudre de café.

FIG. 1

FIG. 2

FIG. 3